**Europäisches Patentamt**

**European Patent Office**

**Office européen des brevets**

(11) Veröffentlichungsnummer: **0 196 365**
**B1**

# (12) EUROPÄISCHE PATENTSCHRIFT

(45) Veröffentlichungstag der Patentschrift:
**22.06.88**

(21) Anmeldenummer: **85114112.7**

(22) Anmeldetag: **06.11.85**

(51) Int. Cl.⁴: **C 08 L 95/00**, D 06 N 5/00,
E 04 D 5/10 // C08L23/14,
C08L23/16

(54) Deckmasse für eine polymermodifizierte Dach- und Dichtungsbahn.

(30) Priorität: **14.03.85 DE 3509037**

(43) Veröffentlichungstag der Anmeldung:
**08.10.86 Patentblatt 86/41**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
**EP - A - 0 009 432**
**DE - A - 2 219 147**
**FR - A - 2 228 817**
**FR - A - 2 288 126**
**US - A - 4 368 228**

(73) Patentinhaber: **HÜLS AKTIENGESELLSCHAFT, - RSP
Patente / PB 15 - Postfach 13 20, D-4370 Marl 1 (DE)**

(72) Erfinder: **Kehr, Helmut, Dr., Gustav-Sack-Strasse 8,
D-4235 Schermbeck (DE)**
Erfinder: **Denzel, Horst, Schwabenstrasse 20,
D-4370 Marl (DE)**

## Beschreibung

Die Erfindung betrifft eine polyolefinhaltige Deckmasse für eine Dach- und Dichtungsbahn, die mit oxidiertem Bitumen dauerhaft verschweissbar ist.

Es ist heute üblich, Dach- und Dichtungsbahnen durch Tränken und/oder Beschichten eines Trägers aus anorganischem oder organischem Fasermaterial oder Folien mit einer polymermodifizierten schmelzbaren Bitumenmasse herzustellen. Nach DIN 52 130 bzw. DIN 52 131 unterscheidet man zwischen elastomer- und plastomer- modifizierten Bahnen. Elastomermodifizierte Bahnen enthalten im allgemeinen Deckmassen aus Mischungen von Elastomeren, wie z.B. SBS-Blockcopolymere, mit Bitumen. Plastomermodifizierte Bahnen enthalten im allgemeinen Deckmassen aus Mischungen von thermoplastischen Polyolefinen mit destilliertem Bitumen. Als Polyolefine werden im allgemeinen die sogenannten ataktischen Polypropylene (auch Copolymere, im allgemeinen mit Ethen) eingesetzt, wie sie bei der Herstellung der sog. isotaktischen Polypropylene — Homo- und Copolymere — als Nebenprodukte anfallen, zuweilen gemischt mit isotaktischem Polypropylen. Die Zusatzmenge an Polyolefinen beträgt 25 bis 40 Gew.-%. Das polyolefinmodifizierte Bitumen zeichnet sich insbesondere durch eine hohe Alterungsbeständigkeit aus.

Die polyolefinmodifizierten Dachbahnen werden im allgemeinen in einer solchen Dicke hergestellt — 4 mm und mehr —, dass man sie durch Anflämmen mit dem Gasbrenner oberflächlich verflüssigen und dadurch mit sich selbst und dem Untergrund verschweissen kann. Die meisten europäischen Richtlinien für die Ausführung von Flachdächern schreiben bei der Verwendung von bituminösen Schweissbahnen für die Dachhaut eine zweilagige Ausführung vor. Aus Kostengründen verwendet man für die untere, der Witterung nicht ausgesetzten Lage häufig eine herkömmliche, aus oxidiertem Bitumen gefertigte Dachbahn und setzt nur für die obere, der Witterung ausgesetzten Lage eine Schweissbahn aus polymermodifiziertem Bitumen ein. Das Ausschweissen einer polymermodifizierten Schweissbahn auf eine — vorhandene, ältere — aus oxidiertem Bitumen gefertigte Dachhaut wird aber auch bei der Sanierung schadhafter Dächer häufig praktiziert.

Nun hat es sich aber herausgestellt, dass man eine polyolefinmodifizierte Dachbahn zwar auf eine Dachbahn aus oxidiertem Bitumen — überwiegend werden die Sorten 100/25 und 100/40 nach DIN 1995 verwendet — wie sie häufig auf Dächern verwendet wird, aufschweissen kann; jedoch verliert die Verschweissung im Laufe der Zeit unter Ausbildung einer schmierigen Zwischenschicht ihre anfängliche Festigkeit. Dadurch wird die Verwendung der an sich wünschenswerte Eigenschaften aufweisenden, polyolefinmodifizierten Dach- und Dichtungsbahnen auf Fälle eingeschränkt, wo eine Verschweissung mit einer Dachbahn aus oxidiertem Bitumen nicht erforderlich ist (z.B. lose Verlegung unter einer Kiesschüttung, Dachhaut aus zwei Lagen polyolefinmodifiziertem Bitumen).

Erfindungsgemäss wird dieser Nachteil vermieden, wenn man für die Deckmasse eine Mischung folgender Zusammensetzung verwendet:

a) 15 bis 20 Gew.-% eines amorphen Copolymeren aus Propen, Buten-1 und ggf. Ethen,
b) 3 bis 5 Gew.-% eines EPDM,
c) 60 bis 82 Gew.-% eines destillierten Bitumens,
d) 0 bis 3 Gew.-% eines isotaktischen Polypropens,
e) 0 bis 15 Gew.-% eines üblichen Füllstoffs,
f) 0 bis 1 Gew.-% eines Antioxidans.

Die erfindungsgemäss verwendeten Copolymere a) werden z.B. durch Polymerisation der α-Olefine in einem flüssigen Kohlenwasserstoff an Katalysatoren vom Ziegler-Typ bei mässigen Drücken und Temperaturen hergestellt. Sie besitzen eine Viskositätszahl J von 20 bis 200 cm³/g, vorzugsweise von 50 bis 150 cm³/g, insbesondere etwa 60 bis 110 cm³/g, eine Löslichkeit in siedendem n-Heptan von 80 bis 100% und einen Erweichungspunkt Ring und Kugel von 80 bis 160°C.

Die Zusammensetzung der Copolymeren beträgt 25 bis 70 Gew.-% Propen-, 20 bis 70 Gew.-% Buten-1- und 0 bis 15 Gew.-% Ethen-Einheiten.

Die Dispergierbarkeit in Bitumen durchläuft ein Minimum, wenn Propen und n-Buten-1 im Verhältnis von etwa 1 : 1 zugegen sind. Bevorzugt werden daher diejenigen Copolymere, bei denen Propen oder n-Buten-1 überwiegt.

Eine bevorzugte Zusammensetzung des amorphen Copolymeren a) besteht daher aus 0 bis 15 Gew.-% Ethen, 60 bis 70 Gew.-% Propen und 20 bis 30 Gew.-% n-Buten-1; solche Copolymere haben einen J-Wert von 70 bis 90 cm³/g, eine Schmelzviskosität bei 190°C von 10 bis 40, bevorzugt 20 bis 40 Pa.s und einen Erweichungspunkt Ring und Kugel von > 150°C.

Eine weitere bevorzugte Zusammensetzung des amorphen Copolymeren a) besteht aus 0 bis 15 Gew.-% Ethen, 25 bis 35 Gew.-% Propen und 60 bis 70 Gew.-% n-Buten-1; solche Copolymere haben einen J-Wert von 60 bis 80 cm³/g, eine Schmelzviskosität bei 190°C von 10 bis 40, bevorzugt 15 bis 30 Pa.s und einen Erweichungspunkt RuK von > 150°C.

Eine weitere bevorzugte Zusammensetzung des amorphen Copolymeren a) besteht aus 0 bis 15 Gew.-% Ethen, 60 bis 70 Gew.-% Propen und 20 bis 30 Gew.-% n-Buten-1; solche Copolymere haben einen J-Wert von 90 bis 110 cm³/g, eine Schmelzviskosität bei 190°C von 40 bis 150, bevorzugt 80 bis 150 Pa.s und einen Erweichungspunkt RuK von > 150°C.

Mit steigendem Molekulargewicht der Komponente a), ausgedrückt durch den J-Wert, nimmt die plastifizierende wie die elastifizierende Wirkung auf das Bitumen zu; natürlich wächst auch der Energieaufwand beim Mischen.

Diese Copolymere a) sind mit den sonst verwendeten ataktischen Polypropenen verträglich. Aus diesem Grunde ist es im Rahmen dieser Erfindung möglich, das Copolymere teilweise durch ataktisches Polypropen zu ersetzen.

Das EPDM b) ist ein hochungesättigtes Ethen-Propen-Ethylidennorbornen-Terpolymer vom Sequenztyp mit hoher Polymerrohfestigkeit (> 10 MPa), das 25 bis 30 Gew.-% Propen und 6 bis 8 Doppelbindun-

gen pro 1 000 C-Atome enthält. Das Vulkanisationsverhalten dieses Typs wird als sehr schnell bezeichnet, wobei dieser Begriff nur zur Charakterisierung des Kautschuks dient, weil die erfindungsgemässen Mischungen ohne Vulkanisation auskommen.

Die Tabelle 1 zeigt die beanspruchte EPDM-Type 1 sowie die nicht beanspruchten Typen 2 bis 6.

Das sog. destillierte Bitumen wird üblicherweise aus dem Rückstand der atmosphärischen Rohöldestillation durch Vakuumdestillation und/oder leichte Oxidation gewonnen. Die Erweichungspunkte Ring und Kugel der verschiedenen Sorten liegen zwischen ca. 35 und ca. 70°C. Für die Modifizierung mit Polymeren werden Sorten mit einem Erweichungspunkt Ring und Kugel von unter 60°C bevorzugt. Am gebräuchlichsten ist die Sorte B 200 nach DIN 1995 mit einem Erweichungspunkt Ring und Kugel von 37 bis 44°C und einer Penetration von 160 bis 210 0,1 mm. Gelegentlich wird auch die Sorte B 80 nach DIN 1995 mit einem Erweichungspunkt Ring und Kugel von 44 bis 49°C und einer Penetration von 70 bis 100 0,1 mm verwendet. Grundsätzlich können auch Mischungen aus verschiedenen Sorten verwendet werden. Es ist auch möglich, die Eigenschaften des Bitumens durch Zugabe von Mineralöl, Fettpechen, Haftmitteln, Wurzelgiften etc. zu verändern.

Als Komponente d), durch deren Zusatz man gewünschtenfalls eine Erhöhung der Härte bewirken kann, eignet sich ein übliches isotaktisches Polypropen, z.B. ein Homopolymer mit einem Schmelzindex von 2 bis 100 g/10', bevorzugt 35 bis 90 g/10'.

Als üblicher Füllstoff e), den man hinzufügen kann, um die Wärmebeständigkeit zu erhöhen und um die Masse zu verbilligen, eignet sich z.B. Schiefermehl. Es wird durch Mahlen von natürlich vorkommendem Tonschiefer, einem aus Tonmineralien und Quarz bestehenden Sedimentgestein, gewonnen. Die Teilchengrösse liegt üblicherweise unter 90 µm. Schiefermehl ist wegen seiner weitgehenden Unlöslichkeit in Säuren ein bevorzugter Füllstoff in der Dachbahnindustrie. Er kann jedoch durch andere Füller wie z.B. Kalksteinmehl, Elektrofilterasche ersetzt werden.

Als Antioxidans f) kann man an sich bekannte Zusätze verwenden, beispielsweise das IRGANOX 1010 der Fa. Ciba für das Antioxidans Pentaerythrityl-tetrakis[3-(3,5-Di-tert.butyl-4-hydroxiphenyl)-propionat].

Zusätze von Kautschuken zu Mischungen aus amorphen Polyolefinen und Bitumen sind an sich bekannt. Sie dienen aber ausschliesslich der Verbesserung der mechanischen Eigenschaften wie Elastizität, Bruchdehnung, Flexibilität in der Kälte, wofür andere Kautschuktypen benötigt werden als für die Stabilisierung der Verschweissung mit oxidiertem Bitumen.

So beschreibt die BE-PS 813 416 Mischungen aus einem Ethen-Propen-Kautschuk, Polyolefinen und Bitumen, in denen der Kautschuk der Verbesserung der mechanischen Widerstandsfähigkeit dient. Es handelt sich dabei jedoch um einen statistischen Kautschuk (copolymère au hasard), bei dem der Diengehalt ausdrücklich keine Rolle spielt. Die erfindungsgemässe Verwendung eines stark ungesättigten Sequenz-EPDM läuft der Lehre dieser Schrift also diametral entgegen. Im übrigen ist der Schrift nicht zu entnehmen, dass sich die Mischungen zur Herstellung von erfindungsgemässen Deckmassen eignen.

Dass man zur Verbesserung der Flexibilität und Zähigkeit des Bitumens Ethen-Propen-Copolymere vom statistischen Typ einsetzt, lehrt auch die US-PS 3 669 918. Mischungen der erfindungsgemässen Art sind dort jedoch nicht beschrieben.

Die US-PS 4 420 524 schliesslich beansprucht eine verbesserte vorfabrizierte, mehrschichtige Dachhaut mit einer Imprägniermasse, die neben Bitumen ataktisches Polypropen und ein amorphes Copolymer von Ethen und Propen enthalten kann. Dieses amorphe Copolymer ist jedoch keinesfalls ein marktübliches EPM oder EPDM, sondern ein Nebenprodukt der Polypropencopolymerherstellung, für das es bislang keine Verwendung gab. Gegenstand dieser US-PS ist im übrigen eine mehrschichtige Bahn, die einlagig als Abdichtung verlegt wird, bei der sich also die Frage der Verschweissung mit einer vorhandenen Lage aus oxidiertem Bitumen überhaupt nicht stellt.

Man stellt die erfindungsgemässen Massen durch Eintragen der Polymere und ggf. der Zuschläge in das heisse Bitumen mit nachfolgendem Mischen her. Zum schnelleren und besseren Aufschluss des EPDM empfiehlt es sich, mit scherenden Mischern zu arbeiten. Es ist jedoch auch möglich, einfache Rührwerke zu verwenden. Den Füllstoff e) trägt man zweckmässig zum Schluss, wenn die Polymere eingemischt sind, ein.

Zur Prüfung schweisst man 4 mm dicke Giessfolien aus den Prüfmischungen mit dem Bunsenbrenner auf eine 4 mm dicke Schweissbahn aus oxidiertem Bitumen mit einer Glasgewebeeinlage, wie sie unter der Bezeichnung GW 4 marktgängig ist, auf. Dabei verflüssigt man sowohl die Oberfläche der Giessfolie als auch die der Bitumenschweissbahn, so dass die Massen beim Zusammenfügen ineinanderfliessen. Man lagert die Prüfkörper, wie in den U.E.A.t.c.-Richtlinien vorgesehen, bei 70°C im Umlufttrockenschrank und beurteilt die Verschweissung nach 7, 14 und 28 Tagen.

Dabei zeigt sich, dass überraschenderweise und erfindungsgemäss nur die Begrenzung des Olefincopolymeranteils a) auf 20 Gew.-% bei gleichzeitiger Verwendung eines EPDM vom Sequenztyp b) mit ganz bestimmten Eigenschaften zum Ziel führt.

Die in der Tabelle 2 zusammengefassten Beispiele erläutern die Erfindung, ohne sie jedoch einzuschränken. Die Mischungen werden nach folgendem einheitlichen Verfahren hergestellt:

Die Gesamtmenge beträgt jeweils 1 300 g. Man legt das Bitumen c) vom Typ B 200 mit 200°C vor und trägt dann die Polymere in der Reihenfolge b) (EPDM), ggf. d) (isotaktisches Polypropen), c) (amorphes Olefincopolymer) ein. Wenn alle Bestandteile plastifiziert sind, mischt man noch 30 Minuten bei ca. 200°C. Anschliessend gibt man ggf. die Füllstoffe in kleinen Portionen unter Mischen zu. Für den Mischvorgang benutzt man einen scherenden Labormischer Typ LDD 1168 der Fa. Silverson Machines Ltd., Chesham, Bucks., GB. Anschliessend kühlt die Masse unter langsamem Rühren mit einem Laborrührer auf ca. 180°C und lässt sich dann zu 4 mm dicken Folien ausgiessen. Aus diesen Folien entnimmt man nach 24 h die Prüfkörper für die Verschweissung.

Alle Mischungen der Tabelle 2 liefern Deckmassen vom Plastomertyp, die hinsichtlich Erweichungspunkt und Kältebeständigkeit die üblichen Anforderungen erfüllen. Eine dauerhafte Verschweissung mit einer Dachbahn aus oxidiertem Bitumen liefern jedoch nur diejenigen Deckmassen, die erfindungsgemäss nicht mehr als 20 Gew.-% amorphes Olefincopolymer und 3 bis 5 Gew.-% eines hochungesättigten, sehr schnell vulkanisierenden Sequenz-EPDM mit hoher Rohfestigkeit und Ethylidennorbornen als Termonomer enthalten. Besonders überraschend ist die Tatsache, dass Art und Menge des Termonomeren eine entscheidende Rolle spielen, obwohl keine Vulkanisation durchgeführt wird.

Die Massen lassen sich in bekannter Weise für die Herstellung von Dach- und Dichtungsbahnen verwenden, indem man sie schmelzflüssig beidseitig auf Trägereinlagen aus organischem und/oder anorganischem Fasermaterial aufträgt. Geeignete Trägereinlagen sind z.B. Polyesterfaservliese mit einem Flächengewicht von 150 bis 300 g/m$^2$, Glasgewebe mit einem Flächengewicht von 150 bis 200 g/m$^2$, Glasvliese von ca. 100 g/cm$^2$. Dabei wird je nach Art der Trägereinlage diese vor der Beschichtung mit der Deckmasse vorimprägniert oder nicht. Zur Vorimprägnierung dient die Deckmasse selbst oder ein anderes polymermodifiziertes Bitumen oder ein polymerfreies Bitumen.

Tabelle 1

Eigenschaften der verwendeten EPDM-Sorten

| | Termonomer | $C_3$ | Doppel-bindung /1000 C | Vulkanisations-verh. | Polymertyp | Rohfestig-keit |
|---|---|---|---|---|---|---|
| EPDM 1 | EN | ~25% | ~8 | sehr schnell | Sequenz | ~11 MPa |
| EPDM 2 | EN | ~40% | ~8 | sehr schnell | statistisch | < 1MPa |
| EPDM 3 | EN | ~30% | ~8 | sehr schnell | Sequenz | ~ 6 MPa |
| EPDM 4 | EN | ~37% | ~11 | sehr schnell | statistisch | < 1 MPa |
| EPDM 5 | EN | ~25% | ~2 | mittel | Sequenz | ~11 MPa |
| EPDM 6 | HX | ~25% | ~5 | schnell | Sequenz | ~ 9 MPa |

EN = Ethylidennorbornen
HX = Hexadien

Tabelle 2

| Mischungs-Nr. | | 1 | 2 | 3 | 4 | 5 | 6 | 7 | 8 |
|---|---|---|---|---|---|---|---|---|---|
| Amorphes Copolymer 7% $C_2$, 63% $C_3$, 30% n-$C_4$, J-Wert = 80 cm$^3$/g | Masse-Tle | 25 | 25 | 22 | 18 | 20 | 20 | 20 | 20 |
| Bitumen Erw. Pkt. RuK 38°C, Pen.: 200 0,1 mm | Masse-Tle | 75 | 62,5 | 62 | 76 | 77 | 64 | 64 | 64 |
| Isotakt. PP 15/190 : 50 g/10' | Masse-Tle | | 2,5 | 3 | 3 | | 3 | 3 | 3 |
| EPDM 1 | Masse-Tle | | | 3 | 3 | 3 | 3 | | |
| EPDM 2 | Masse-Tle | | | | | | | 3 | |
| EPDM 3 | Masse-Tle | | | | | | | | 3 |
| EPDM 4 | Masse-Tle | | | | | | | | |
| EPDM 5 | Masse-Tle | | | | | | | | |
| EPDM 6 | Masse-Tle | | | | | | | | |
| Schiefermehl | Masse-Tle | | 10 | 10 | | | 10 | 10 | 10 |
| Irganox 1010 [3] | Masse-Tle | 0,2 | 0,2 | 0,2 | 0,2 | 0,2 | 0,2 | 0,2 | 0,2 |
| Erw. Pkt. RuK DIN 52 011 | °C | 149 | 154 | 156 | 152 | 149 | 156 | 157 | 156 |

Tabelle 2 (Fortsetzung)

| Mischungs-Nr. | | 1 | 2 | 3 | 4 | 5 | 6 | 7 | 8 |
|---|---|---|---|---|---|---|---|---|---|
| Pen. DIN 52 010 | 0,1 mm | 44 | 31 | 25 | 30 | 48 | 24 | 32 | 29 |
| Kältebeständigkeit DIN 52 123 | °C | −20/−25 | −25/−30 | −25/−30 | −20/−25 | −20/−25 | −20/−25 | −20/−25 | −20/−25 |
| Verschweissung mit GW 4 frisch | | + | + | + | + | + | + | + | + |
| nach Alterung 28 d bei 70°C | | — | — | — | + | + | + | — | — |

Folgetabelle 2

| Mischungs-Nr. | | 9 | 10 | 11 | 12 | 13 | 14 | 15 | 16 |
|---|---|---|---|---|---|---|---|---|---|
| Amorphes Copolymer 7% $C_2$, 63% $C_3$, 30% n-$C_4$, J-Wert = 80 $cm^3$/g | Masse-Tle | 20 | 20 | 20 | 18 | 20[1] | 20[2] | 20 | 20 |
| Bitumen Erw. Pkt. RuK 38°C, Pen.: 200 0,1 mm | Masse-Tle | 64 | 64 | 64 | 77 | 64 | 64 | 65 | 66 |
| Isotakt. PP 15/190 : 50 g/10′ | Masse-Tle | 3 | 3 | 3 | | 3 | 3 | 3 | 3 |
| EPDM 1 | Masse-Tle | | | | | 5 | 3 | 3 | 2 | 1 |
| EPDM 2 | Masse-Tle | | | | | | | | |
| EPDM 3 | Masse-Tle | | | | | | | | |
| EPDM 4 | Masse-Tle | 3 | | | | | | | |
| EPDM 5 | Masse-Tle | | 3 | | | | | | |
| EPDM 6 | Masse-Tle | | | 3 | | | | | |
| Schiefermehl | Masse-Tle | 10 | 10 | 10 | | 10 | 10 | 10 | 10 |
| Irganox 1010 [3] | Masse-Tle | 0,2 | 0,2 | 0,2 | 0,2 | 0,2 | 0,2 | 0,2 | 0,2 |
| Erw. Pkt. RuK DIN 52 011 | °C | 153 | 156 | 156 | 142 | 156 | 156 | 157 | 157 |
| Pen. DIN 52 010 | 0,1 mm | 31 | 26 | 25 | 46 | 23 | 25 | 25 | 27 |
| Kältebeständigkeit DIN 52 123 | °C | −25/−30 | −20/−25 | −20/−25 | −20/−25 | −20/−25 | −15/−20 | −20/−25 | −20/−25 |
| Verschweissung mit GW 4 frisch | | + | + | + | + | + | + | + | + |
| nach Alterung 28 d bei 70°C | | — | — | — | + | + | + | o | — |

1) 1/3 des amorphen Copolymer ist ersetzt durch ein ataktisches Polypropylen mit folgenden Eigenschaften: Schmelzvisk. b. 190°C; 3000 mPa s, Pen. 20 0,1 mm, Erw. Pkt. RuK 158°C

2) Es wurde ein amorphes Copolymer mit folgender Charakteristik verwendet: 4% $C_2$; 32% $C_3$; 64% n-$C_4$, J-Wert = 65 $cm^3$/g

3) Pentaerythrityl-tetrakis[3-(3,5-Di-tert.butyl-4-hydroxiphenyl)-propionat]

+ = sehr gute Haftung

o = mässige Haftung

— = schwache bis keine Haftung

## Patentansprüche

1. Bitumenhaltige Deckmasse für eine polymermodifizierte Dach- und Dichtungsbahn, die mit Schichten aus oxidiertem Bitumen dauerhaft verschweissbar ist, bestehend aus

a) 15 bis 20 Gew.-% eines amorphen Copolymeren aus Propen, Buten-1 und ggf. Ethen,

b) 3 bis 5 Gew.-% eines EPDM,

c) 60 bis 82 Gew.-% eines destillierten Bitumens,

d) 0 bis 3 Gew.-% eines isotaktischen Polypropens,

e) 0 bis 15 Gew.-% eines üblichen Füllstoffs,

f) 0 bis 1 Gew.-% eines Antioxidans,

dadurch gekennzeichnet, dass das EPDM ein Ethen-Propen-Ethylidennorbornen-Terpolymer vom Sequenztyp mit 25 bis 30 Gew.-% Propen, 6 bis 8 Doppelbindungen pro 1000 C-Atome und einer Rohfestigkeit von > 10 MPa ist.

2. Deckmasse gemäss Anspruch 1, bei der das amorphe Copolymer a) aus 0 bis 15 Gew.-% Ethen, 60 bis 70 Gew.-% Propen und 20 bis 30 Gew.-% n-Buten-1 besteht und einen J-Wert von 70 bis 90 cm$^3$/g, eine Schmelzviskosität bei 190°C von 10 bis 40 Pa.s und einen Erweichungspunkt RuK von > 150°C besitzt.

3. Deckmasse nach Anspruch 1, bei der das amorphe Copolymer a) aus 0 bis 15 Gew.-% Ethen, 25 bis 35 Gew.-% Propen und 60 bis 70 Gew.-% n-Buten-1 besteht, einen J-Wert von 60 bis 80 cm$^3$/g, eine Schmelzviskosität bei 190°C von 10 bis 40 Pa.s und einen Erweichungspunkt RuK von > 150°C besitzt.

4. Deckmasse nach Anspruch 1, bei der das amorphe Copolymer a) aus 0 bis 15 Gew.-% Ethen, 60 bis 70 Gew.-% Propen und 20 bis 30 Gew.-% n-Buten-1 besteht und einen J-Wert von 90 bis 110 cm$^3$/g, eine Schmelzviskosität bei 190°C von 40 bis 150 Pa.s und einen Erweichungspunkt RuK von > 150°C besitzt.

5. Deckmasse nach Anspruch 1 bis 4, bei der das amorphe Copolymer a) teilweise durch ataktisches Polypropen ersetzt ist.

6. Dach- und Dichtungsbahn, bestehend aus einem oder mehreren Trägern aus organischem und/oder anorganischem Fasermaterial, gewebt oder nicht gewebt, und einer Beschichtung mit den Deckmassen gemäss Anspruch 1 bis 5.

7. Dach- und Dichtungsbahn nach Anspruch 6, bei der die Trägereinlage(n) vor der Beschichtung mit der Deckmasse mit derselben Masse oder mit einem anderen polymermodifizierten Bitumen oder einem polymerfreien Bitumen vorimprägniert ist.

## Claims

1. A bitumen-containing covering composition for polymer-modified roof and sealing sheeting which can be durably welded to layers of oxidized bitumen and which is composed of

a) 15 to 20% by weight of an amorphous copolymer of propene, 1-butene and optionally ethene,

b) 3 to 5% by weight of an EPDM,

c) 60 to 82% by weight of a distilled bitumen,

d) 0 to 3% by weight of an isotactic polypropylene,

e) 0 to 15% by weight of a conventional filler, and

f) 0 to 1% by weight of an antioxidant,

characterized in that the EPDM is a sequential ethene-propene-ethylidenenorbornene terpolymer containing 25 to 30% by weight of propene, 6 to 8 double bonds per 1,000 C atoms and a crude strength of > 10 MPa.

2. A covering composition according to claim 1, in which the amorphous copolymer a) is composed of 0 to 15% by weight of ethene, 60 to 70% by weight of propene and 20 to 30% by weight of 1-n-butene, and has a J value of 70 to 90 cm$^3$/g, a melt viscosity of 10 to 40 Pa.s at 190°C and a ring-and-ball softening point of > 150°C.

3. A covering composition according to claim 1, in which the amorphous copolymer a) is composed of 0 to 15% by weight of ethene, 25 to 35% by weight of propene and 60 to 70% by weight of 1-n-butene, and has a J value of 60 to 80 cm$^3$/g, a melt viscosity of 10 to 40 Pa.s at 190°C and a ring-and-ball softening point of > 150°C.

4. A covering composition according to claim 1, in which the amorphous copolymer a) is composed of 0 to 15% by weight of ethene, 60 to 70% by weight of propene and 20 to 30% by weight of 1-n-butene, and has a J value of 90 to 110 cm$^3$/g, a melt viscosity of 40 to 150 Pa.s at 190°C and a ring-and-ball softening point of > 150°C.

5. A covering composition according to any of claims 1 to 4, in which the amorphous copolymer a) is partly replaced by atactic polypropene.

6. Roof and sealing sheeting, composed of one or more substrates of organic and/or inorganic fibre material, woven or nonwoven, and a coating containing the covering composition according to any of claims 1 to 5.

7. Roof and sealing sheeting according to claim 6, in which, before coating with the covering composition, the substrate inlay is pre-impregnated with the same composition or with another polymer-modified bitumen or a polymer-free bitumen.

## Revendications

1. Masse de recouvrement renfermant du bitume pour une nappe de recouvrement et d'étanchéification de toiture qui est modifiée par des polymères, peut être soudée durablement avec des couches de bitume oxydé, ladite couche qui est constituée:

a) par 15 à 20% en poids d'un copolymère amorphe à base de propène, de butène-(1) et éventuellement d'éthène

b) par 3 à 5% en poids d'un EPDM,

c) par 60 à 82% en poids d'un bitume distillé,

d) par 0 à 3% en poids d'un polypropène isotactique,

e) par 0 à 15% en poids d'une charge usuelle,

f) par 0 à 1% en poids d'un agent de protection contre l'oxydation, étant caractérisée par le fait que l'EPDM est un terpolymère d'éthène, de propène et d'éthylidène-norbornène de type séquencé comportant 25 à 30% en poids de propène, 6 à 8 doubles liaisons par 1 000 atomes de carbone et une résistance brute supérieure à 10 MPa.

2. Masse de recouvrement selon la revendication 1, caractérisée par le fait que le copolymère amorphe (a) qu'elle renferme est constitué par zéro à 15% en poids d'éthène, par 60 à 70% en poids de propène et par 20 à 30% en poids de n-butène-(1) et qu'il présente un indice de viscosité J de 70 à 90 cm$^3$ par gramme, une viscosité à l'état fondu à 190°C de 10 à 40 Pa.s et un point de ramollissement RuK supérieur à 150°C.

3. Masse de recouvrement selon la revendication 1, caractérisée par le fait que le copolymère amorphe (a) qu'elle renferme est constitué par zéro à 15% en poids d'éthène, par 25 à 35% en poids de propène et par 60 à 70% en poids de n-butène-(1) et qu'il présente un indice de viscosité J de 50 à 80 cm$^3$ par gramme, une viscosité à l'état fondu, à 190°C, de 10 à 40 Pa.s et un point de ramollissement RuK supérieur à 150°C.

4. Masse de recouvrement selon la revendication 1, caractérisée par le fait que le copolymère amorphe (a) qu'elle renferme est constitué par zéro à 15% en poids d'éthène, par 60 à 70% en poids de propène et par 20 à 30% en poids de n-butène-(1) et qu'il présente un indice de viscosité J de 90 à 110 cm$^3$ par gramme, une viscosité à l'état fondu, à 190°C, de 40 à 150 Pa.s et un point de ramollissement RuK supérieur à 150°C.

5. Masse de recouvrement selon les revendications 1 à 4, caractérisée par le fait que le copolymère amorphe (a) qu'elle renferme est partiellement remplacé par du polypropylène atactique.

6. Nappe de recouvrement et d'étanchéification de toitures, caractérisée par le fait qu'elle est constituée par un ou plusieurs substrats en un matériau fibreux organique et/ou minéral, tissé ou non-tissé, et par une enduction avec les masses de recouvrement selon les revendications 1 à 5.

7. Nappe de recouvrement et d'étanchéification de toitures selon la revendication 6, caractérisée par le fait que la ou les garniture(s) du substrat sont pré-imprégnées, avant l'enduction avec la masse de recouvrement, avec la même masse ou avec un autre bitume modifié au polymère ou avec un bitume exempt de polymère.